# EUROPEAN PATENT APPLICATION

(11) **EP 1 257 139 A1**
(43) Date of publication of application: **13.11.2002**
(21) Application number: 01111398.2
(22) Date of filing: 10.05.2001
(51) Int. Cl.: H04Q 7/38

(54) **Routing of incoming traffic in shared mobile telecommunication networks**

(71) Applicant: Telefonaktiebolaget L M Ericsson (Publ), 126 25 Stockholm (SE)
(72) Inventor: Stille, Mats, SE- 11643 Stockholm (SV)
(74) Representative: Tonscheidt, Andreas

(57) **Abstract**

The invention addresses the field of mobile communications. It relates to a method, network node and computer program for routing a call to a mobile subscriber through a shared mobile telecommunication network shared by at least one operator. According to the invention the basic approach is to analyse the mobile subscriber identifying number of the called subscriber in order to detect a branching parameter and according to the result of the analysis to choose an operator in the destination network and to allocate a to the operator corresponding roaming number for routing the call.

## Description

### Technical field of the invention

The present invention relates to a method according to the preamble of claim 1. Furthermore, devices and programs for performing a routing of incoming traffic in shared mobile telecommunication networks are described.

### Background

According to the costs of the development of the Third Generation Universal Mobile Telecommunication System 3G UMTS networks the 3G UMTS operators are going to share commonly the mobile telecommunication networks, like for example a core network or a radio access network. The core network can be a UMTS network and the radio access network can be UMTS Terrestrial Radio Access Network UTRAN.

Routing a call from one to another network administrated by different operators requires a usage of a roaming number. The roaming number digits are constructed in a way that makes it possible for intermediate telephony switches to choose the correct route for routing a call. A detailed description of the roaming number is given in 3GPP TS 23.003 V3.7.0 (2000-12)" Numbering, addressing and identification (Release 1999)".

Since the roaming number is used for routing a call to a roaming user within the destination network it is a task of this network to allocate a roaming number. The allocated roaming number is then forwarded to the originating network in order to perform a call. Currently the roaming number is chosen from a sequence of free numbers. Since in the shared mobile communication network a few operators share the network according to the interconnection agreements of the operators it is required to take this into consideration by switching a call through the shared network.

### Summary and description of the invention

It is an object of the present invention to perform the routing of incoming traffic in shared mobile telecommunication networks in a controlled way. In particular it is an object of the present invention to allow routing a call to a roaming mobile subscriber over the interconnection points in accordance with the interconnection agreements of the operators.

According to the invention, the method described in claim 1 is performed. Furthermore, the invention is embodied in network nodes and software programs as described in claims 11 and 12. Advantageous embodiments are described in the dependent claims.

According to the invention the basic approach is to enable a deciding entity to analyse the mobile subscriber identifying number of the called subscriber in order to detect a branching parameter and according to the result of the analysis to choose an operator and to allocate a corresponding roaming number for routing the call.

In an advantageous embodiment of the method the mobile subscriber identifying number can be a International Mobile Subscriber Identity IMSI number, which includes a country code, network code and mobile subscriber identification number. From this number the network code can be taken as a branching parameter to distinguish between the different networks.

A network node, which will be called shared network node in the following, is adapted to perform the method according to claim 1. The said shared network node contains analysis entity for analysing the mobile subscriber identifying number for a branching parameter, means for choosing an operator according to the result of the analysis and entity for allocating a corresponding roaming number.

In an advantageous embodiment of the invention the shared network node contains pools of free roaming numbers. The subdivision of the free roaming numbers into pools depends on the agreements of the operators sharing the shared mobile communication network.

In order to provide a correspondence between the network code included in the mobile subscriber identifying number and a specific operator's part of the shared mobile communication network the interconnection agreements between the operators are to be taken into consideration. These agreements allow making the subdivision of the roaming numbers into pools with the distinguishing of the different operators. The analysis of the mobile subscriber identifying number delivers an operator. With this information a corresponding pool of free roaming numbers can be chosen and subsequently a roaming number from the pool.

In an advantageous embodiment of the invention the source network contains a gateway-switching node, like for example Gateway MSC GMSC in GSM or a Gateway GPRS Support Node GGSN in General Packet Radio Service GPRS, for performing a call to a user and a home location register, like for example Home Location Register HLR in GSM, the HLR containing data of the user registered in the said network. These nodes guarantee that the operators still have a home network so that a mobile subscriber roaming in other country will be first connected to the home network of the operator before the calls will be routed further to a shared network. This structure has the advantage that it enables the operators to have incoming traffic directed over their home networks in order to keep their respective existing interconnection agreements with other mobile operators.

In an advantageous embodiment of the invention in order to perform a call the following steps are to be performed. In the first step the gateway-switching node in the source network is contacted, which communicates with the corresponding home location register of the called user. This node determines the mobile subscriber identifying number mobile, which is forwarded to the shared network node. The shared network node analyses the mobile subscriber identifying number and allocates a roaming number from the appropriate pool of the free roaming numbers, which is subsequently provided to the gateway-switching node in the source network. A call is established by the gateway-switching node to the shared network node, which forwards the call via the appropriate operator's network to the called user.

The foregoing and other objects, features and advantages of the present invention will become more apparent in the following detailed description of preferred embodiments as illustrated in the accompanying drawings.

### Brief description of the drawings

- Fig. 1: shows an embodiment of the invention for a terminating
call to a mobile station.
- Fig. 2: shows a structure of an IMSI number.
- Fig. 3: shows a flow diagram of the routing procedure for incoming traffic in a shared mobile telecommunication network.

### Detailed description of preferred embodiments.

In the following the handling of the routing of incoming traffic is described in detail by using the GSM nomenclature.

A mobile communication network has different entities, which are required for handling a call. In the following the most relevant entities for the explanation of the invention are described.

A mobile subscriber is connected to a mobile network via a mobile station MS. The MS communicates with a Base Transiver Station BTS, which is connected to a Base Station Controller BSC. From the BSC leads a connection to a Mobile Switching Center MSC. Often the MSC is associated to a database called Visitor Location Register VLR containing the record about the current position of the mobile subscriber within the MSC. The node, which contains both the MSC and the VLR is described as MSC/VLR. A central database called Home Location Register HLR contains information relevant to the provision of telecommunications services and also information about the current MSC area of the mobile subscriber.

The GSM system is divided into a number of separate operational networks each being administrated by different operators. Each of the networks is called Public Land Mobile Network PLMN. Most countries have several PLMNs. A gateway switch called Gateway Mobile Switching Center GMSC is a node responsible for connection of the different networks. The GMSC is a node for example, which is contacted in order to set up a call, when there is no knowledge of the whereabouts of the subscriber. For locating him first the HLR of the subscriber is to be found. This is done with the called user phone number, for example the Mobile Station ISDN MSISDN, which includes the code of the country and of the operator. In the HLR the called user phone number is translated into an International Mobile Subscriber Identity IMSI number.

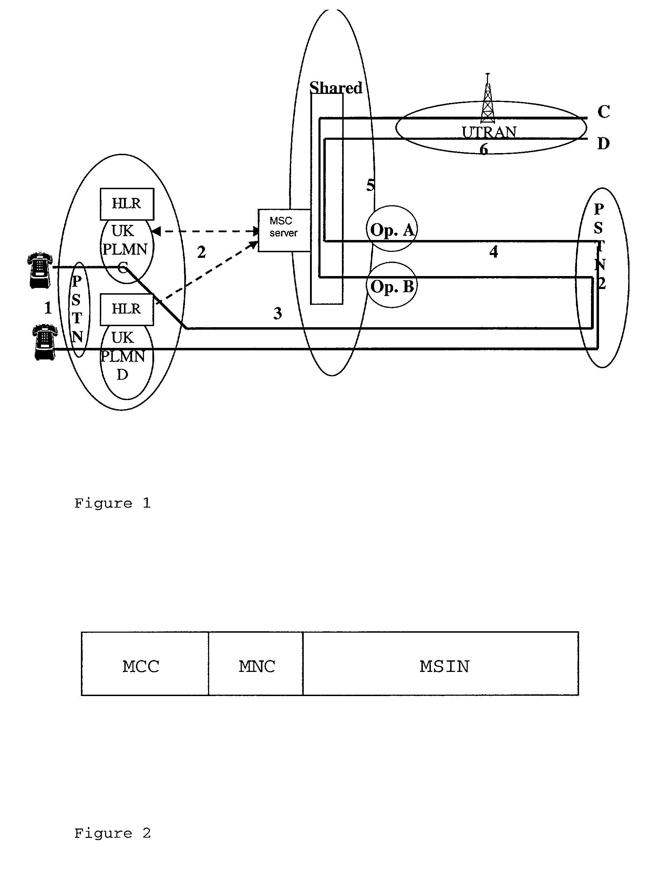

In figure 2, a structure of an IMSI as in the state of the art is depicted. According to 3GPP TS 23.003 V3.7.0 (2000-12)" Numbering, addressing and identification (Release 1999)" the IMSI consists of three parts. The Mobile Country Code MCC identifies country and has the size of 3 digits. The MCC code is defined in Recommendation CCITT E.212, which ensures a consistent way of addressing a country. The second part is the Mobile Network Code MNC, which identifies a PLMN within this country. The Mobile Subscriber Identification Number MSIN describes a subscriber within the PLMN. The size of the second part is 2 digits and the third part uses not more than 10 digits.

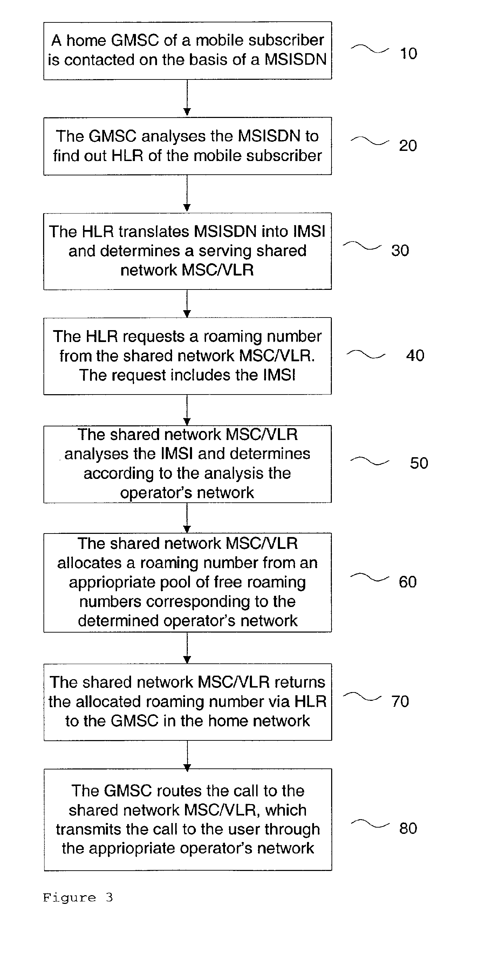

In the following a detailed description of the steps in the handling of routing of incoming traffic in a shared mobile telecommunication network is given with respect to figure 3. In particular the assignment of roaming number according to the information included in the IMSI is described.

In order to establish a connection to a mobile subscriber his GMSC is contacted by using the MSISDN, step 10. The GMSC analyses the MSISDN to find out which HLR the MS is registered in, step 20. The GMSC queries the HLR for information about the routing way of the call to the serving MSC/VLR. The HLR translates the MSISDN into the IMSI of the subscriber and determines which MSC/VLR is currently serving the MS. In case of a shared mobile communication network the shared network MSC/VLR is determined, step 30. The shared network MSC/VLR is a shared network node, which is located in the shared mobile communication network and which contains at least one pool of free roaming numbers corresponding to the operator sharing said mobile communication network. In the next step, 40 the HLR requests a roaming number from the shared network MSC/VLR. The request ProvideRoamingNumber from the HLR contains the IMSI of the called mobile subscriber and is in detail described in the 3GPP TS 23.018 V3.6.0 (2000-09) "Basic call handling; Technical realization(Release 99)". Parts of the IMSI number indicate in the field mobile network code, which operator, for example a foreign operator, the called subscriber belongs to, step 50. The shared network MSC/VLR can therefore use the IMSI, in particular the mobile network code as input branching parameter to differentiate between different operator's networks. According to the determined operator's network an appropriate pool of free roaming numbers is chosen, step 60. The number of pools can depend on the number of the operators, which are handled by the shared network MSC/VLR. For example with two operators the shared network MSC/VLR administrates two pools of free roaming numbers, the first pool contains roaming numbers that lead to routing to the first operator's home network GMSC, whereas pool two contains roaming numbers that lead to routing to the second operator's home network GMSC. For example, roaming numbers of the first pool have the structure 46-707-xxxxxx, and 46-705-xxxxxx is the structure of the second pool. In the following the first pool is called pool 1 and the second pool is assigned as pool 2. The correspondence between the mobile network code in IMSI and the operator's network in the shared mobile communication network is to be defined on the basis of the interconnection agreements between the operators.

In the following an example shows the assignment of roaming numbers. The example considers four operators two UK operators and two Swedish operators. The UK operators are described as UK operator C or UK operator D and the Swedish operators have the names Swedish operator A or Swedish operator B.

Thus, if the IMSI number indicates that the called user is subscribed to UK operator C with which only Swedish operator A has a roaming agreement with, then the shared network MSC/VLR would allocate roaming numbers from pool 1. If operator C has agreements with operator B only instead, a roaming number would be allocated from pool 2. But if both operator A and B have roaming agreements with operator C, then roaming numbers from one of the two pools would be selected, in accordance to commercial agreements between operator A and B. If there is yet another UK operator D, with which both operator A and B have roaming agreements, then one possible commercial set up could be that the MSC/VLR allocates roaming numbers from pool 1 for called C subscribers and from pool 2 for called D subscribers. Whatever roaming number MSC/VLR selects, it will associate the IMSI of the called subscriber with the temporary allocated roaming number, in order to route an arriving call.

The shared network MSC/VLR returns the allocated roaming number via the HLR to the GMSC in the home network, for example to the GMSC of the UK operator C, step 70. When a GMSC receives an international roaming number which is recognised on the basis of a country code, which is different from the GMSC country code, then the GMSC routes the call to an international exchange. This exchange routes the call to the destination country point of interface exchange, for example to the GMSC of the home domain of the Swedish operator A or B. In this way, operator A and B can keep their international interconnecting agreements. They would have had to establish new agreements if a shared network GMSC was to be set as international interconnection point of interface.

The home network GMSC of the Swedish operator A or B transits the call to the shared network MSC/VLR using the own preferred national backbone transit network, step 80. When the call is received in the shared network MSC/VLR, the roaming number is analysed to find the IMSI of the called subscriber and thereafter paging and call set up takes place in a well known manner. The roaming number is freed and given back to the corresponding pool it was taken from in order to be used for subsequent terminating mobile calls.

In the following example of the invention a call to a mobile station is explained in more details according to figure 1.

Figure 1 shows two UK mobile subscribers C and D, who are roaming for example in a Swedish 3G UMTS shared network indicated in figure 1 as Shared. The home PLMN of the UK mobile subscriber C is the UK PLMN C with the corresponding HLR and respectively for the UK mobile subscriber D the UK PLMN D with the corresponding HLR. The MSC server indicates the shared network MSC/VLR. The name MSC server is chosen in order to point out the possibility of having a layered MSC, as it is described in the 3GPP. The layered MSC consists of a Media Gateway Node and a MSC Controller. This structure allows distinguishing between the call control, which is handled by the MSC Controller and the payload information, which goes through the Media Gateway. The names Op.A and Op.B in figure 1 stand for the two different operators in Sweden.

In the first step 1 a call is requested to be established. In order to perform this the IMSI number of the mobile subscriber is to be delivered. This is performed as it is described above using the MSISDN number. In the next step 2 the HLR of the UK PLMN C makes a roaming number provision request including the IMSI of the called mobile subscriber, to the Swedish shared network MSC/VLR, in the figure 2 indicated by MSC server. An equivalent handling is to be performed for a call to the mobile subscriber D. The MSC server uses the received IMSI to select a roaming number from one of the existing pools. In this embodiment the MSC server administrates two pools according to the interconnection agreements of the operators, operator's B pool and operator's A pool. According to the interconnection agreement of this example calls from the network C are to be routed through the network's part of the operator A and calls from the network D through the network's part of the operator B. In case the received IMSI includes an operator code corresponding to the UK PLMN C then a roaming number from the operator's A pool of free roaming numbers is selected and returned to HLR. If the IMSI contains the operator code of the UK PLMN D, then a roaming number from the operator's B pool of free roaming numbers is returned. For example the returned roaming number structure for the operator A could be +46 707xxxx and for the operator B +46 705xxxx. It could be that there is no operator preference at all and in that case a random selection function of a roaming number from one of the two roaming number pools may apply. In step 3 the received roaming number is routed from the GMSC of the UK PLMN C or respectively UK PLMN D over an international carrier's transit switching equipment to the roaming country. The roaming number structure, for example +46707xxxx or +46705xxxx enables the fixed network in Sweden PSTN2 to route the incoming call to the GMSC of operator A Op.A or operator B Op.B, respectively. The GMSC of the operator A or B proceed the routing to the MSC server that previously selected the roaming number, step 5. The GMSC of the operator A or B just forwards the call to the MSC server without an interrogation of any HLR. The MSC server orders in step 6 a paging and call set up towards the mobile subscriber C or respectively D through the appropriate interconnection points of the shared mobile communication network according to the interconnection agreements of the operators.

Embodiments of the invention refer to network elements like an MSC/VLR adapted to perform said methods, and to software adapted to control the performing of said methods.

Without being limited to, the invention can be used preferably in all communications systems as defined by 3GPP in the release 99 as well as in all future releases thereof. In particular, this includes UMTS and WCDMA networks, core networks, access networks, GSM and GPRS networks and the corresponding user equipment. The networks show nodes, which functionality corresponds to the functionality of the GSM nodes, as described in the preferred embodiment of the invention, for example Radio Network Controller RNC in UTRAN corresponds to the BSC, Gateway GPRS Service Node GGSN to the MSC.

## Claims

1. Method for routing a call to a mobile subscriber through a shared mobile telecommunication network shared by at least two operators wherein said mobile telecommunication network contains a shared network node assigning roaming numbers for routing the call and wherein the mobile subscriber is identified by a mobile subscriber identifying number and a roaming number is assigned to the mobile subscriber identifying number
**characterised in that**
for the assignment of the roaming number the mobile subscriber identifying number is analysed to detect a branching parameter and according to the result of the analysis an operator is chosen and a roaming number corresponding to the operator is allocated for routing the call.

2. Method according to claim 1 **characterised in that** the mobile subscriber identifying number is an International Mobile Subscriber Identity IMSI number including a country code, a network code and a mobile subscriber identification number.

3. Method according to claim 2 **characterised in that** the branching parameter is the network code.

4. Method according to any preceding claim **characterised in that** the roaming numbers are subdivided into pools of free roaming numbers according to the interconnection agreements of the operators.

5. Method according to claim 4 **characterised in that** a pool is assigned to an operator.

6. Method according to any preceding claim **characterised in that** a network code is assigned to an operator.

7. Method according to claim 6 **characterised in that** a roaming number is allocated from one pool of free roaming numbers according to the correspondence between the network code and the pool corresponding to the operator.

8. Method according to any preceding claim **characterised in that** the analysis of the mobile subscriber identifying number is performed in the shared network node, which is located in the shared mobile communication network, through which the call is to be routed to the destination.

9. Method according to any preceding claim **characterised in that** a source network from which the call is initiated contains a gateway-switching node for performing the call to the user and a home location register with the data of the user registered in the said network.

10. Method according to claim 9 wherein in order to perform a call the following steps are performed,
- the gateway-switching node in the source network is contacted and,
- the gateway-switching node contacts the home location register of the called user and,
- the home location register determines the mobile subscriber identifying number, which is forwarded to the shared network node and,
- the shared network node analyses the mobile subscriber identifying number and allocates an appropriate roaming number and,
- the shared network node provides the roaming number to the gateway-switching node in the source network and,
- the call is established through the corresponding operator's network part of the shared mobile telecommunication network to the called user.

11. Network node adapted to route a call to a mobile subscriber through a shared mobile telecommunication network shared by at least two operators wherein said network node assigns roaming numbers for routing the call and wherein the mobile subscriber is identified by a mobile subscriber identifying number and a roaming number is assigned to the mobile subscriber identifying number
**characterised in that**
the network node contains an analysis entity for analysing the mobile subscriber identifying number for a branching parameter, entity for choosing an operator according to the result of the analysis and entity for allocating a corresponding roaming number.

12. Computer program, loadable into the internal memory of a digital processing unit, comprising software code portions adapted to control the steps according to claim 1, when the computer program is executed on the digital processing unit.

13. Computer program according to claim 1, wherein the computer program is stored on a computer-readable medium.
